Europäisches Patentamt

European Patent Office

Office européen des brevets

(19)

(11) **EP 0 652 810 B2**

(12) # NEUE EUROPÄISCHE PATENTSCHRIFT

(45) Veröffentlichungstag und Bekanntmachung des Hinweises auf die Entscheidung über den Einspruch:
**03.07.2002   Patentblatt 2002/27**

(45) Hinweis auf die Patenterteilung:
**18.02.1998   Patentblatt 1998/08**

(21) Anmeldenummer: **94918792.6**

(22) Anmeldetag: **25.05.1994**

(51) Int Cl.⁷: **B07B 1/40**, B07B 1/42

(86) Internationale Anmeldenummer:
**PCT/EP94/01699**

(87) Internationale Veröffentlichungsnummer:
**WO 94/27748 (08.12.1994 Gazette 1994/27)**

(54) **VORRICHTUNG UND VERFAHREN ZUM SIEBEN, KLASSIEREN, SICHTEN, FILTERN ODER SORTIEREN VON STOFFEN**

PROCESS AND DEVICE FOR SIFTING, SORTING, SCREENING, FILTERING OR SIZING SUBSTANCES

PROCEDE ET DISPOSITIF DE CRIBLAGE, DE TRIAGE, DE SEPARATION, DE FILTRAGE OU DE TAMISAGE DE SUBSTANCES

(84) Benannte Vertragsstaaten:
**AT BE CH DE DK ES FR GB IT LI NL SE**

(30) Priorität: **26.05.1993   DE 4317525**

(43) Veröffentlichungstag der Anmeldung:
**17.05.1995   Patentblatt 1995/20**

(73) Patentinhaber: **TELSONIC AG**
**CH-9552 Bronschhofen (CH)**

(72) Erfinder:
• **FREI, Karl**
**CH-9500 Wil (CH)**
• **SOLENTHALER, Jürgen**
**CH-9500 Wil (CH)**

(74) Vertreter: **Hepp, Dieter et al**
**Hepp, Wenger & Ryffel AG,**
**Friedtalweg 5**
**9500 Wil (CH)**

(56) Entgegenhaltungen:
**EP-A- 0 369 572**      **DE-C- 3 602 351**
**FR-A- 2 682 050**

EP 0 652 810 B2

**Beschreibung**

Die Erfindung betrifft eine Vorrichtung sowie ein Verfahren zum Sieben, Klassieren, Sichten, Filtern oder Sortieren trockener fester Stoffe oder fester Stoffe in Flüssigkeiten nach den Oberbegriffen der unabhängigen Patentansprüche.

Es ist bekannt, daß die durch Ultraschall erzeugten schwingenden Bewegungen besonders beim Sichten und Feinsieben einen günstigen Einfluß auf den Siebdurchsatz und das Siebgut ausüben; das Siebgut wird durch die übertragenen schwingenden Bewegungen im Mikronbereich schonend behandelt, die Agglomerierungskräfte und Oberflächenspannungen werden erheblich reduziert und die allgemeine Neigung zum Verstopfen der Siebmaschen nimmt ab oder wird gänzlich verhindert.

Die EP 0 369 572 A2 offenbart eine Siebvorrichtung mit in einem Rahmen eingespannter Siebfläche und an diese gekoppeltem piezoelektrischem Wandler. Letzterer ist mehrteilig sowie zwischen zwei Körper unterschiedlicher Massen eingespannt, von denen der jener Siebfläche nähere aus zwei Teilen besteht; der eine Teil ist mit dem Sieb verklebt, der andere auswechselbar. Zudem wird ein Regelkreis beschrieben, der das Siebgewebe unter Last in Resonanz halten soll - dies aber dürfte technisch nicht möglich sein.

Der Ultraschallwandler wird im Buch "Ultraschall" von Wilhelm Lehfeldt, 1973, Vogel-Verlag, ISBN 3-8023-0060-2, Seite 40, als Verbundschwinger bezeichnet und läßt sich in allen Bereichen der aktiven Ultraschallanwendungen -- wie beispielsweise Ultraschallschweißen und Ultraschallreinigen -- einsetzen. In diesem Buch findet auf Seite 48 zu Schaltungen mit automatischer Frequenznachführung jener in EP 0 369 572 A2 angedeutete Regelkreis Erwähnung.

Alle bisher bekannten Verfahren haben den Nachteil, daß die Schallverteilung über das ganze aktive Siebgewebe, das in den meisten Fällen aus einem Drahtgewebe besteht, sehr schlecht ist. Die Ursache dieses Verhaltens liegt darin, daß das meist straff in einem runden oder rechteckigen Stahlrahmen montierte Siebgewebe nicht in Resonanz mit der Arbeitsfrequenz erregt werden kann. Dazu fehlen die physikalischen Voraussetzungen. Das Siebgewebe kann nur als relativ schlechter Ultraschalleiter dienen. Liegt zudem Siebgut auf dem Gewebe, führt die dadurch entstehende Dämpfung zu einer weiteren Reduzierung der Schalleitfähigkeit.

Diese Zusammenhänge führen dazu, daß schon nach wenigen Zentimeter Distanz von der Schallquelle die Schallintensität -- und damit auch der Fördereffekt-- stark reduziert ist.

In Kenntnis dieser Gegebenheiten hat sich der Erfinder das Ziel gesetzt, durch eine geeignete Konstruktion diese Nachteile weitgehend zu beseitigen.

Es sollen Sieb- und Klassiervorgänge sowie Maschinen dafür verbessert sowie das Sieben im Trokken- und Naßbereich mit Hilfe von Ultraschall begünstigt werden.

Es sollen Resonatoren so ausgebildet werden, daß sich das Sieb möglichst über die ganze Fläche in ungedämpfte schwingende Bewegung versetzt.

Zur Lösung dieser Aufgabe führen die Lehren der unabhängigen Patentansprüche. Die Unteransprüche geben weitergehende Ausgestaltungen an.

Dem Ultraschallwandler soll erfindungsgemäß wenigstens ein der Siebfläche anliegender Resonator zugeordnet werden, der auf die Resonanz des Ultraschallwandlers abgestimmt und von letzterem in Schwingungen -- insbesondere in Biegeschwingungen-- versetzbar ist und der mit fingerartig von ihm an der Siebfläche abragenden Resonanz übertragenden Elementen ist versehen.

Die Lösung besteht also mit anderen Worten darin, daß kein Bereich auf der aktiven Siebfläche mehr als ca. 20 bis 30 cm von der nächsten Ultraschallquelle entfernt liegt. Dies gelingt mit einem System von Resonatorstäben, die im Biegeresonanzmod arbeiten und von einem einzigen Ultraschallwandler erregt werden. Bei den häufig verwendeten runden Schüttelsiebmaschinen ist es zweckmäßig, den Schallwandler in das Zentrum zu setzen und die Resonatorstäbe radial um diesen Schallwandler herum anzuordnen. Dieser Schallwandler erzeugt auf bekannte Weise Longitudinalschwingungen, die in den tangential zur longitudinalen Schwingrichtung angeordneten Resonatorstäben Biegeschwingungen der gleichen Frequenz anregen. Die Schwingungsamplituden bei 40 kHz liegen bei etwa 2 $\mu$m. Die benötigte Ultraschalleistung liegt bei etwa 60 Watt pro qm Siebfläche.

Da die Resonatorstäbe in ihrer Eigenresonanz erregt werden, ist die Amplitude an jedem Bewegungsknoten unabhängig von Länge und Belastung immer gleich. Mit dieser Methode der Verwendung einer Vielzahl von Resonatorstäben hat man es in der Hand, die Schalldichte und die Schallhomogenität auf dem Siebgewebe beliebig zu verändern.

Das Siebgewebe kann durch eine Klebung in gutem Kontakt mit jedem Resonatorstab stehen.

Nach einem weiteren Merkmal der Erfindung sollen jene Stabresonatoren in Abstand zum Rahmen enden. Die gesamte sternförmige Vorrichtung ist bevorzugt über Entkopplungsbleche in den Siebrahmen geschweißt und bildet mit diesem zusammen eine Einheit, die auch mechanisch sehr stabil ist.

Die Verwendung einer Vielzahl von Resonatorstäben, die im Biegemod von einem einzigen Schallwandler erregt werden, macht es möglich, daß keine schalltoten Inseln auf dem Siebgewebe entstehen können. Damit ist die Aufgabe, die sich der Erfinder gestellt hat, auf elegante Art und Weise gelöst. Die Resonatorstäbe können dabei verschiedene Formen aufweisen. Sie können gebogen, kreisrund oder einfach gerade sein. Ihr Querschnitt wird aufgrund von physikalischen Gesetzmäßigkeiten gewählt, welche die Erregung der gewünschten Biegeschwingungen in einer Vorzugsrichtung ermöglichen. Sie können aus Vollmaterial oder aus einem hohlen Profil bestehen. Aus Gewichtsgründen ist ein hohles Profil vorzuziehen.

So kann gemäss einem Aspekt der Erfindung im kreisförmigen Rahmen wenigstens ein konzentrischer ringförmiger Stabresonator verlaufen, der mit dem Rahmen durch radiale Entkopplungsbleche verbunden ist. Der Ultraschallwandler wird hier exzentrisch angebracht.

Alle jene Entkopplungsbleche werden bevorzugt in einem Knotenpunkt des Bewegungsnullpunktes befestigt. Als günstig hat es sich erwiesen, auf die Stabresonatoren ein Lochbiech oder ein großmaschiges Gitter aufzulegen.

Vorteilhafterweise soll zwischen Ultraschallwandler und Resonator wenigstens ein Befestigungselement verlaufen, und an diesem sollen die Stabresonatoren befestigt sein, die in Biegeresonanz mit dem Ultraschallwandler schwingen, wobei weitere Biegeschwingungen erzeugbar und auf die Siebfläche übertragbar sind.

Vorteilhaft ist der Resonator an einer ein Amplitudenminimum aufweisenden Stelle form- oder kraftschlüssig, direkt oder indirekt, mit den Siebrahmen verbunden; die Siebfläche soll durch den Ultraschallwandler mit dem Resonator an zumindest einer Stelle abgestützt sein.

Vorteilhaft ist auch, daß die ganze Siebvorrichtung durch ein oder mehrere übergeordnete Schwingsysteme in allen Ebenen bewegt werden kann.

Auch können zwei Siebe aufeinanderliegen oder miteinander verbunden sein, wobei das gröbere der beiden Siebe nur für die Fortpflanzung und die Übertragung der Schwingungen verwendet wird. Auch können spezielle Siebe eingesetzt werden, die aus verschiedenen Drahtdurchmessem bestehen.

Mit dieser Siebvorrichtung können Verfahrensbedingungen hergestellt werden, bei denen zwischen der oberen und unteren Siebfläche ein Druckunterschied herrscht und/oder, daß die Materialverteilung auf dem Sieb mittels Gas- oder Flüssigkeitsstrahl erfolgt.

Bei einer besonderen Ausführungsform wird das Siebgut auf dem Sieb durch Bürsten und Profile aus Kautschuk Kunststoff und Metall verteilt und/oder das Siebgul mittels Gas- oder Flüssigkeitsstrahl auf die Siebfläche befördert.

Zudem sind auf der Siebfläche liegende Körper einsetzbar, die sich frei zur Siebfläche bewegen.

Die Verteilung des Ultraschalls vom Ultraschallwandler kann mit frequenzabgestimmten Schalleitungen aus Metall erfolgen.

Als vorteilhaft hat es sich erwiesen, den Ultraschallwandler hermetisch abzudichten und explosionsgeschützt zu gestalten.

Die Arbeitsfrequenz soll erfindungsgemäß im Bereich von 15 - 100 kHz liegen.

Das System kann auch frequenz- und amplitudenmoduliert werden, oder aber, nur frequenzmoduliert oder nur amplitudenmoduliert werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Fig.1: eine geschnittene Schrägsicht auf ein Sieb, das über seine gesamte Fläche in schwingende Bewegung versetzbar ist mit Ultraschallwandler und dazu radialen Biegewellen-Stabresonatoren;

Fig. 2: den Querschnitt durch Fig. 1 nach deren Linie ll-ll;

Fig. 3: den Befestigungsbereich eines radialen Biegewellen-Stabresonatoren an einem Wandlerhals in Seitenansicht;

Fig. 4: die Draufsicht auf ein anderes Sieb mit radialen Longitudinalwellen-Stabresonatoren;

Fig. 5: den Querschnitt durch Fig. 4 nach deren Linie V-V;

Fig. 6: eine Schrägsicht auf einen Ultraschallbiegeresonator mit einem Teil eines Longitudinalresonators;

Fig. 7: einen vergrößerten Radialschnitt durch einen Teil der Fig. 6;

Fig. 8: den Querschnitt durch einen pilzartig geformten Ultraschallwandler;

Fig. 9: einen Querschnitt durch einen Ultraschallresonator mit radialen Stabresonatoren;

Fig. 10: ein geändertes Detail der Fig. 9;

Fig. 11: eine Schrägsicht auf die Vorrichtung nach Fig. 8;

Fig. 12, 13: der Fig. 11 entsprechende Darstellungen weiterer Vorrichtungen;

Fig. 14: eine Schrägsicht auf ein weiteres Sieb;

Fig. 15: eine der Fig. 3 etwa entsprechende Wiedergabe eines anderen Wandlerhalses mit einem Teil eines eingespannten Lochbleches;

| Fig. 16,17: | Draufsichten auf Teile von Lochblechen; |
| Fig. 18 bis 20: | Schrägsichten auf Resonatorköpfe mit Lochblechauflagen; |
| Fig. 21, 22: | Schrägsichten auf Resonatorköpfe; |
| Fig. 23, 24: | Schnitte durch Ultraschallwandler anderer Ausführungen; |
| Fig. 25: | den Längsschnitt durch ein Siebsystem; |
| Fig. 26: | eine Schragsicht auf ein Feinsieb samt Kurvenskizze; |
| Fig. 27: | die Draufsicht auf ein Siebgewebe; |
| Fig. 28: | vergrößerte Querschnitte durch Siebgewebe; |
| Fig. 29: | die Draufsicht auf einen Konverter mit mehreren Resonatoren; |
| Fig. 30: | eine Seitenansicht zu Fig. 29; |
| Fig. 31 bis 33: | Schnitte durch unterschiedliche Schwingsiebmaschinen; |
| Fig. 34: | die Draufsicht auf eine Ultraschallsiebvorrichtung mit verschiedenen Körpern auf einer Siebfläche. |

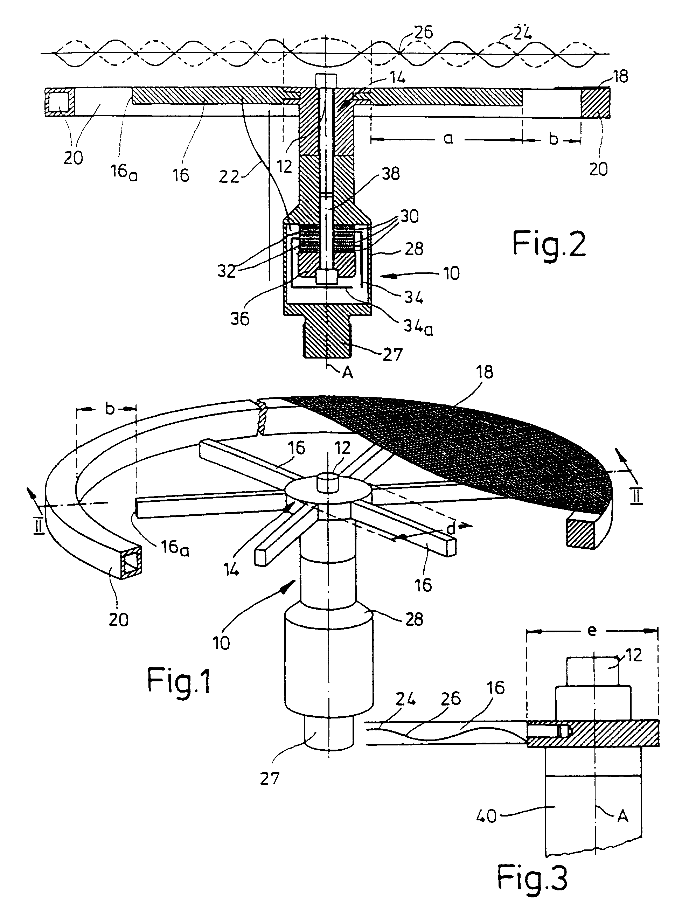

Ein Ultraschallwandler oder Konverter 10 gemäß Fig. 1, 2 schwingt mit einem Biegewellenresonator -- aus einem Ober ihm axial angeordneten und durch ein Befestigungselement 12 angebrachten Biegewellen-Membranresonator 14 und mehreren Biegewellen-Stabresonatoren 16 -- in Longitudinalresonanz. Dabei erregt der Ultraschallwandler 10 den Biegewellen-Membranresonator 14 des Durchmessers d zu Biegeschwingungen. Diese werden auf die von ihm radial abragenden und unter einer Siebfläche bzw. einem Sieb 18 verlaufenden Biegewellen-Stabresonatoren 16 übertragen. Das Sieb 18 ist in einem ringförmigen -- in Fig. 1, links, hohlen oder, rechts, vollen -- Rahmen 20 eingespannt, zu dem die freien Enden $16_a$ der Biegewellen-Stabresonatoren 16 einer freien Länge a in einem Spaltabstand b enden.

In Fig. 2 ist mit 22 der Verlauf der Longitudinalwellen skizziert und über dem Sieb 18 mit 24 der Verlauf der Amplitude, deren einer Nullpunkt bei 26 liegt.

In einem abgedichteten, über einem Wandlerständer 27 angeordneten Sockelgehäuse 28 des Ultraschallresonators 10 sind wechselweise PZT-Ringe 30 und Beryllium-Kupfer-Scheiben 32 mit Leitungsanschlüssen 34, $34_a$ untergebracht. Die PZT-Ringe 30 sowie die Beryllium-Kupfer-Scheiben 32 sind mit einer unteren Sockelplatte 36 in der Wandlerachse A von einem Gewindestift, einer Schraube 38 od. dgl. Organ durchsetzt, der axial zum Befestigungselement 12 verläuft. Letzteres durchgreift einen Wandlerhals 40.

Es sind also mehrere aufeinander abgestimmte, gekoppelte Schwingsysteme vorgesehen, die miteinander auf der gleichen Frequenz schwingen. Der Durchmesser d des Membranresonators 14 sowie die Länge a der Stabresonatoren 16 sind von erheblicher Bedeutung und müssen auf die Betriebsfrequenz abgestimmt werden.

In Fig. 3 ist der Befestigungsbereich der radialen Begewellen-Stabresonatoren 16 eines Querschnitts von 8 x 8 mm auf dem Wandlerhals 40 einer Kopfweite e von 80 mm dargestellt mit angedeuteter Schwingungskurve, deren Knoten alle 21 oder 42 mm wiederkehren.

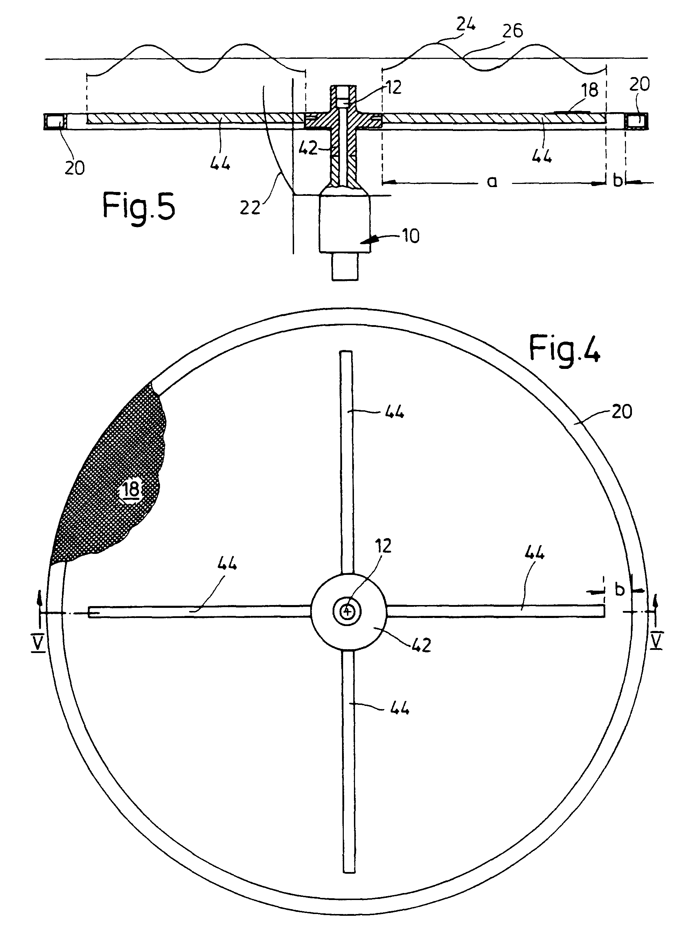

Der Ultraschallwandler 10 der Fig. 4, 5 schwingt in Longitudinalresonanz mit einem Ober ihm festliegenden Dehnungswellenresonator 42. Von diesem ragen radial Longitudinalwellen-Stabresonatoren 44 ab, die in der eigenen Longitudinalresonanz erregt werden. Im Gegensatz zum Biegeresonator liegen beim Longitudinalresonator die Amplitudennullpunkte 26 viel weiter auseinander, wie es beispielhaft oberhalb des Siebes 18 in Fig. 5 angedeutet ist. Dieser Ultraschallwandler 10 ist mit seinem Dehnungswellenresonator 42 gegebenenfalls einstückig.

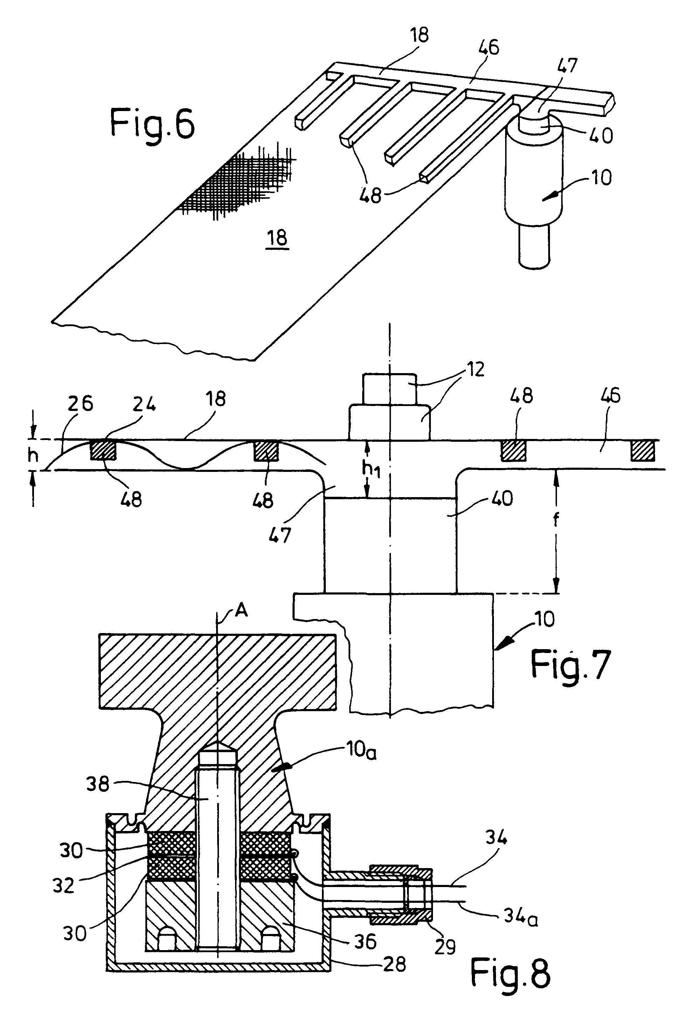

Nach Fig. 6, 7 quert den Ultraschallwandler oder Konverter 10, der in der Mitte oder an den Siebrahmenecken dieses Longitudinalresonator-Systems angeschlossen sein kann, in Abstand f wenigstens ein Radialstab 46 der Höhe h von 10 mm mit zentralem Anschlußstück 47 der Höhe h1 von 21 mm. Von diesem Radialstab 46, der wie die Stabresonatoren 16 aus einem Metallprofil hergestellt ist, gehen parallele Querstäbe 48 mit dem zu den Stabresonatoren 16 der Fig. 5 beschriebenen rechteckigen Querschnitt aus.

Eine pilzförmige Ausgestaltung eines Ultraschallwandlers $10_a$, der Longitudinalschwingungen in Membranschwingungen umwandelt, ist in Fig. 8 explosionsgeschützt dicht mit dem Sockelgehäuse 28 verschweißt, das eine dichte seitliche Durchführung 29 für die Leitungen 34, $34_a$ zweier an PZT-Ringe 30 angelegter Beryllium-Kupfer-Scheiben 32 -- als Sandwichschwinger -- anbietet.

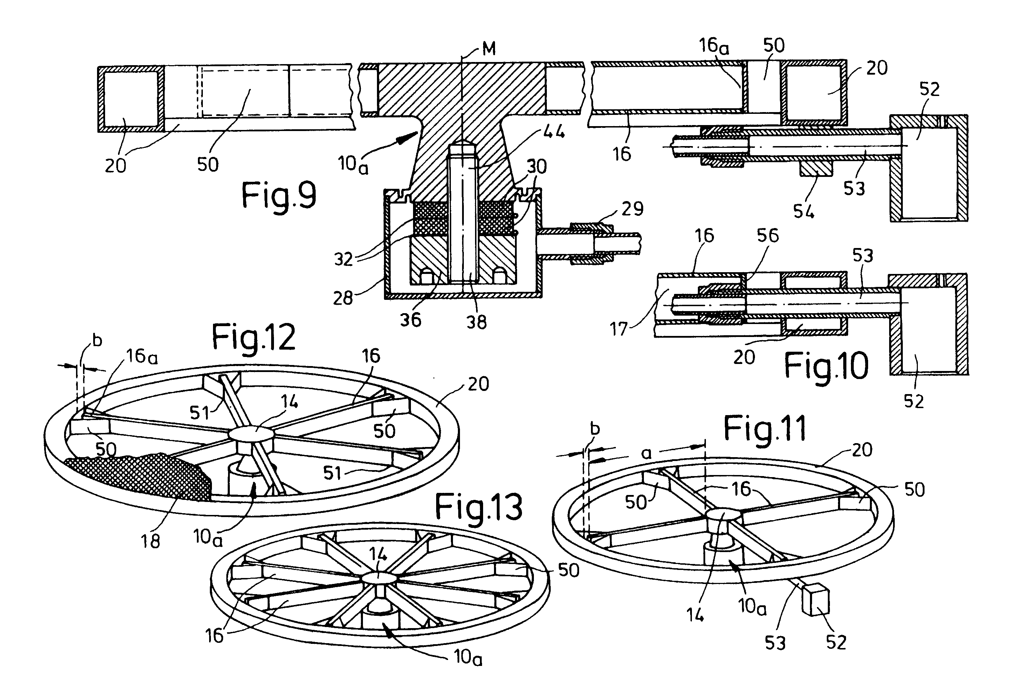

Dieser Ultraschallresonator $10_a$ mit den Platten 30 aus Piezokeramik zwischen den Kontaktelementen 32 ist in Fig. 9 bis 13 mit -- drei bis acht -- bevorzugt hohlen Biegewellen-Stabresonatoren 16 als Biegeschwinger versehen, deren freie Enden $16_a$ durch flügelartige Entkopplungsbleche 50 an den Rahmen 20 angeschlossen sind. Deren achsparallele Anschlußnaht 51 liegt in einem Bewegungsnullpunkt. Es handelt sich um einen besonders gut abgestimmten Resonator zur Schallverteilung.

An dem in Fig. 9 rechten Rahmenquerschnitt ist ein Steckergehäuse 52 mit Durchgang 53 zu erkennen, der unterhalb des Rahmens 20 an einem Halter 54 festliegt. Der Durchgang 53 der Fig. 10 vefläuft in Höhe der hohlen Stabresonatoren 16, deren Innenraum mit 17 bezeichnet und durch einen Stirndeckel 56 verschlossen ist.

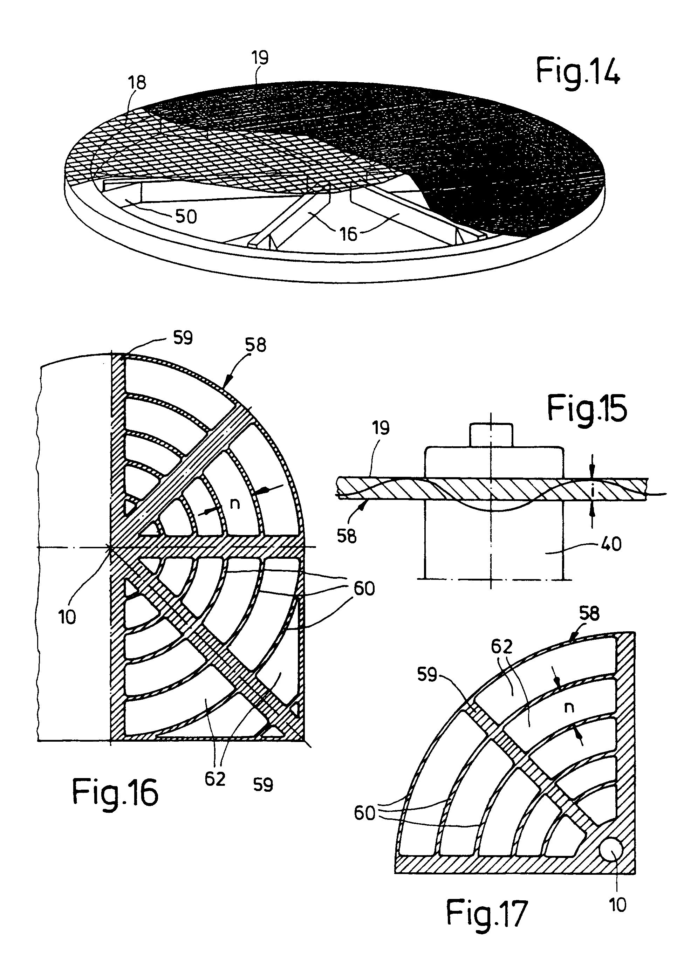

Das Sieb der Fig. 14 zeigt einen Siebbelag aus einem gröberen Sieb 18 und einem Feinsieb 19.

In den Wandlerhals 40 der Fig. 15 ist ein -- bevorzugt mit einer Laserschneidmaschine erzeugtes -- Lochblech 58 der Dicke i (von beispielsweise 8 mm bei Aluminium und von 12 mm bei Stahl) eingespannt, auf das ein Feinsieb 19 aufgeklebt oder in anderer Weise gehalten ist. Das eingesetzte Lochblech 58 bietet hier Radialrippen 59 und diese verbindende Ring- oder Bogenrippen 60 an, deren Abstand n voneinander $\frac{\lambda}{2}$ mißt. Dieses Lochblech 59 kann auch andere Konturen und Ausnehmungen 62 aufweisen. Bei der Ausführung der Fig. 16 liegt der Ultraschallwandler 10 zentral, in Fig. 17 an einem Eck.

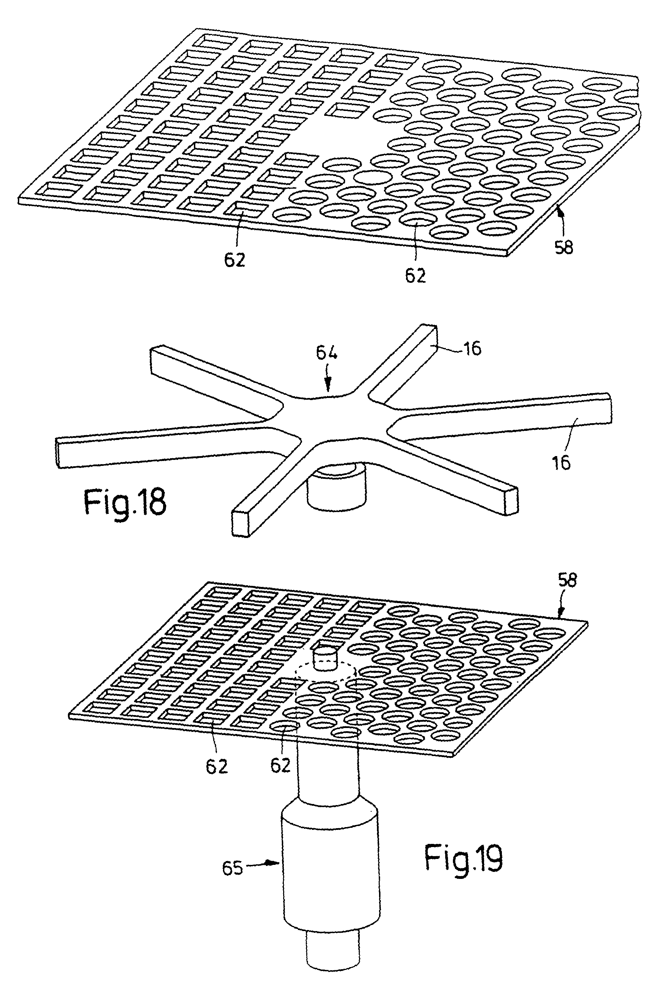

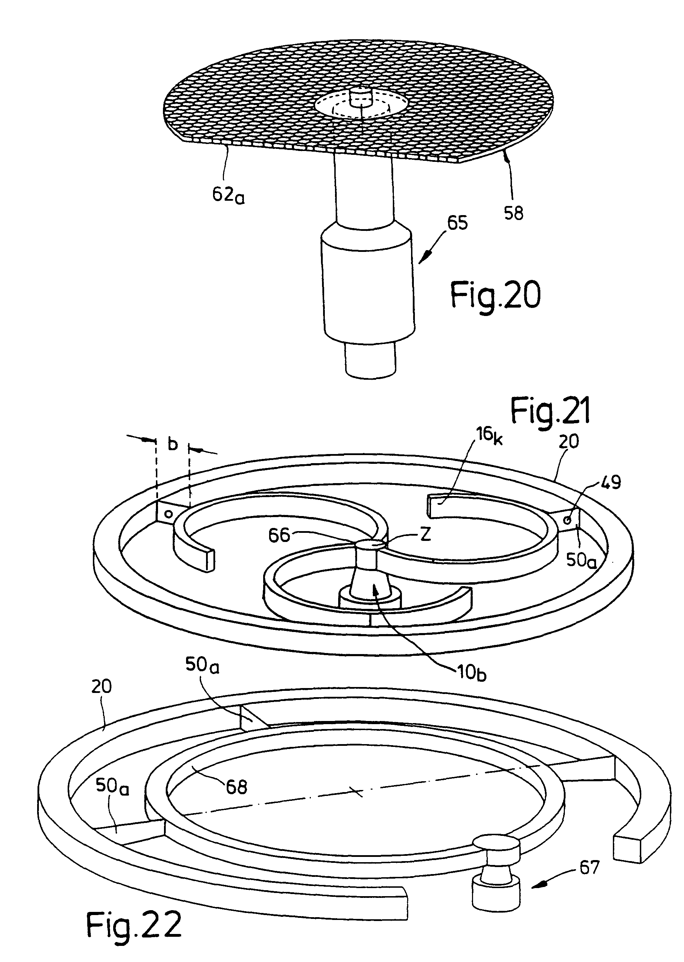

Andere Lochblechformen mit runden und rechtwinkeligen Ausnehmungen 62 deuten Fig. 18 oberhalb eines Resonatorkopfes 64 mit radialen Stabresonatoren 16 und Fig. 19, 20 -- letztere mit Wabendumhbrüchen $62_a$ -- auf einem Resonatorkopf 65 ohne Stabresonatoren an.

Der Resonatorkopf 66 des Ultraschallwandlers $10_b$ der Fig. 21 weist innerhalb des Rahmens 20 zu diesem in Radialabstand b drei vom Zentrum Z ausgehende etwa teilkreisförmige Stabresonatoren $16_k$ auf, die -- gleichgerichtet gekrümmt -- nahe ihrer freien Enden an dünnen und i.w. radial verlaufenden Entkopplungsblechen $50_a$ festliegen. In diesen ist jeweils zumindest ein Durchbruch 49 angeordnet - ein solcher kann auch in den Entkopplungsblechen 50 der Fig. 11 bis 14 vorhanden sein.

Der Resonatorkopf 67 der Fig. 22 trägt exzentrisch innerhalb des Rahmens 20 an den Entkopplungsblechen $50_a$ einen Kreisstab 68.

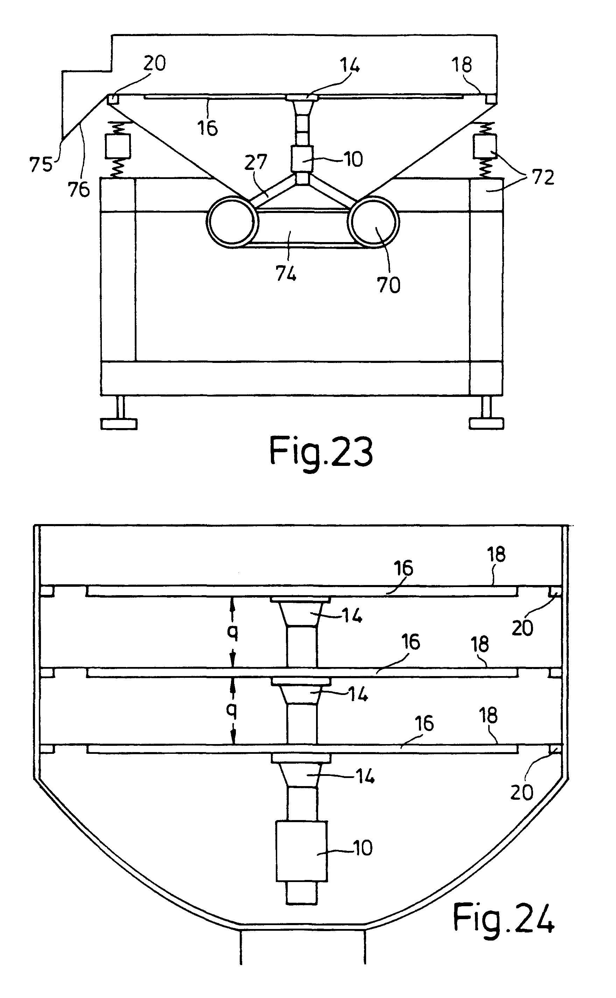

Vorteilhafterweise kann die Ultraschallsiebvorrichtung nach der Erfindung als Zusatz in eine bestehende Schwingsiebmaschine 70 (Fig. 23) eingebaut werden. Mit dieser wird der Ultraschallwandler 10 form- oder kraftschlüssig verbunden. Die durch das übergeordnete mechanische Schwingsystem verursachten Massenträgheitskräfte werden von der Ultraschallsiebvorrichtung und deren Befestigung aufgenommen und nicht auf das Sieb 18 und den Siebrahmen 20 übertragen. Das Sieb 18 erhält somit eine weitere Abstützung, was besonders bei großen feinmaschigen Siebflächen von Bedeutung ist.

Der Ultraschallwandler 10 der Fig. 23 ist mit seinem Biegewellenmembran-Resonator 14 in eine runde Schwingsiebmaschine 70 auf Schwingstelzen 72 eingebaut. Deren schwingende Bewegungen sorgen für eine gleichmäßige Verteilung des Siebgutes 74 auf der Siebfläche 18 und ermöglichen den Austrag des Grobgutes 75 über einen Randausgang 76.

Fig. 24 zeigt, daß auch mehrere Biegewellenresonatoren 14 übereinander in einem der Frequenz angepaßten Abstand q von $\frac{\lambda}{2}$ durch einen Ultraschallwandler 10 angeregt werden können.

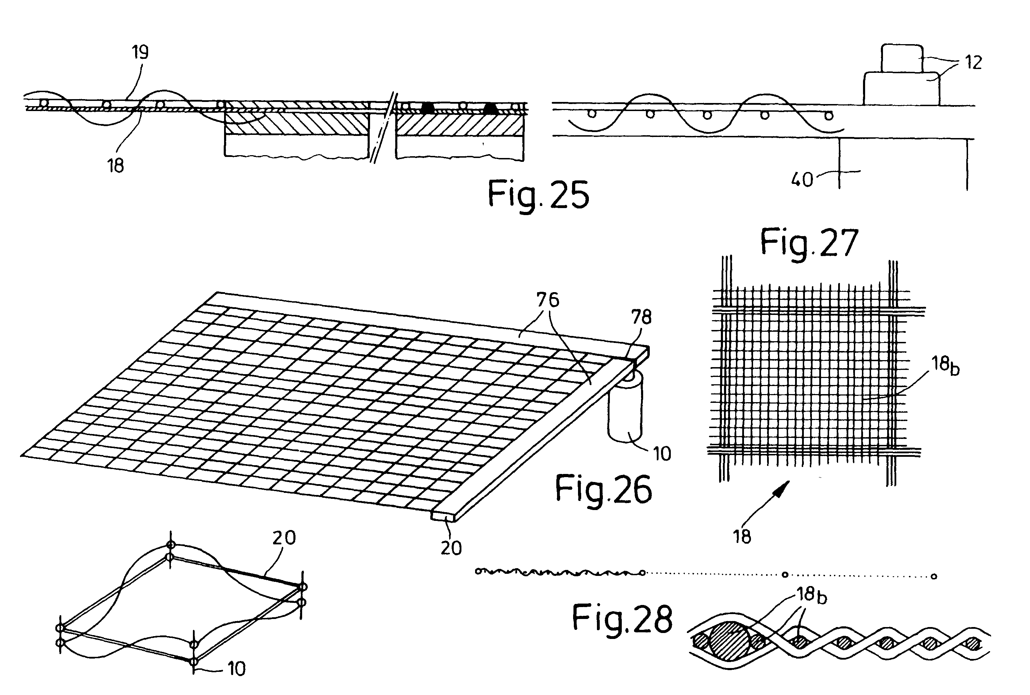

In Fig. 25 liegen zwei Siebe 18, 19 aufeinander, wobei das eine Sieb 18 nur für Fortpflanzung und Übertragung der Schwingungen eingesetzt wird. Die Schwingung wird mittels Klebstoff oder durch das Eigengewicht des Siebgutes übertragen. Die Erfindung hat den Vorteil, daß nicht nur den Ultraschall gut weiterleitende Stahlsiebe zum Einsatz kommen, sondern auch synthetische Sieb- und Filtergewebe als Feinsieb 19. Auch können große Flächen beschallt werden.

Das Feinsieb 19 wird nur am Rande festgelegt (Fixierpunkte 76 in Fig. 26), und es wird durch das Siebgut auf das Stützgitter 18 gedrückt, wobei der Ultraschall übertragen wird und zwar nur dann, wenn auf dem Feinsieb 19 Siebgut lastet. Das Stützgitter 18 besteht hier beispielsweise aus Stahldrähten von 2 bis 4 mm Durchmesser. Die Rahmenteile sind bei 78 durch einen Spalt getrennt. Unterhalb der Siebfläche ist ein Schwingungsbild angedeutet.

Bei einem speziellen Siebgewebe für das Ultraschallsieben ist nach Fig. 27, 28 der Maschendraht $18_b$ unterschiedlich dick; dank der dickeren Drähte breitet sich der Ultraschall auf dem ganzen Sieb 18 aus.

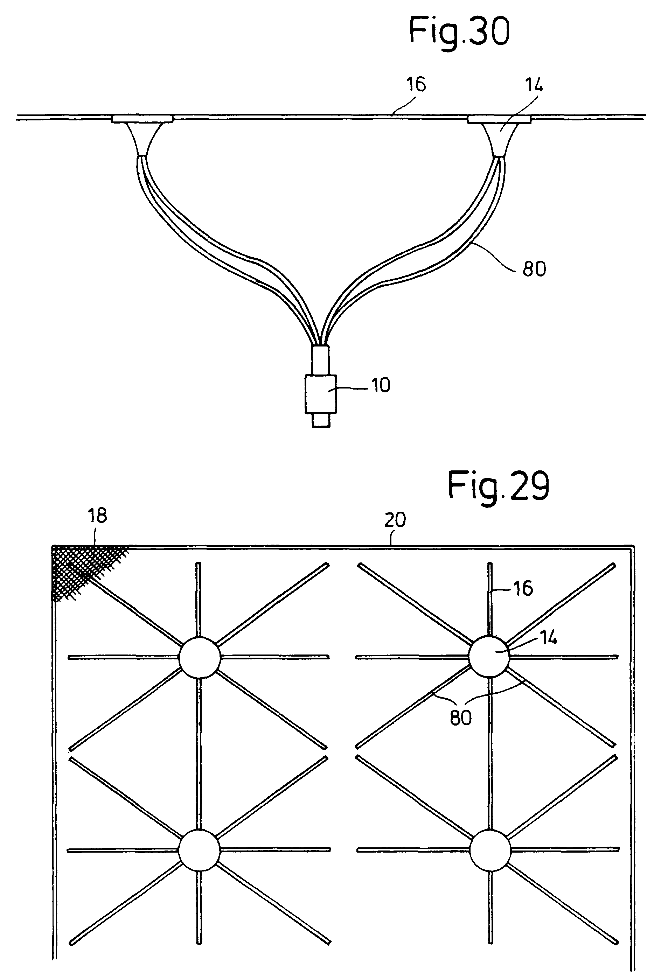

Gemäß Fig. 29, 30 wird Ultraschall mit abgestimmten Schalleitern 80 aus Metall von einem Konverter 10 auf mehrere mit einem Sieb verbundene Resonatoren 14, 16 übertragen. Der Ultraschallwandler 10 ist also auch hier nicht direkt mit dem Resonator 14, 16 verbunden.

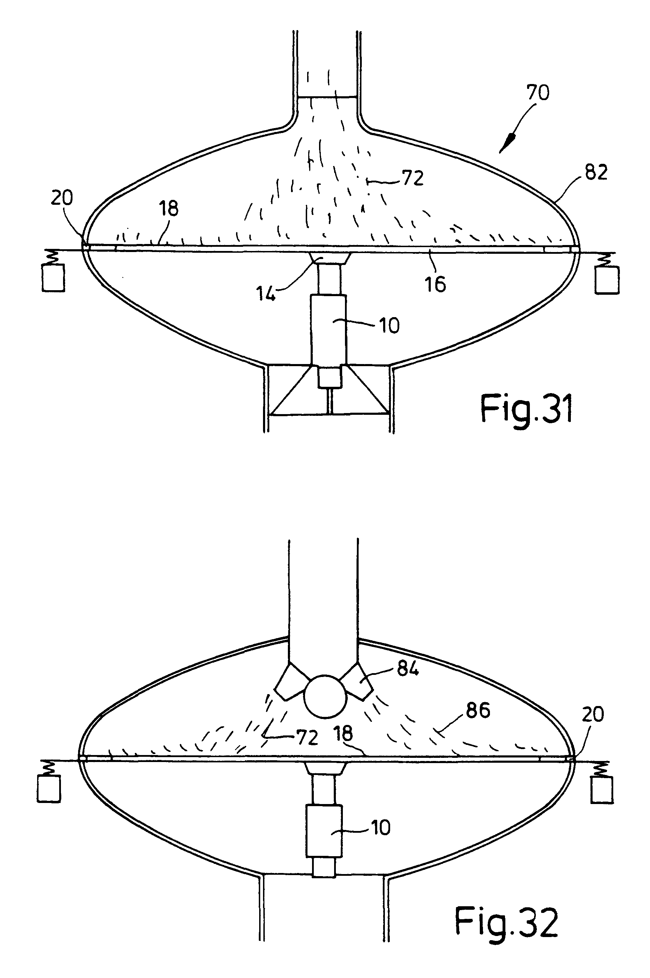

In den nachfolgenden Figuren der Zeichnung werden Hilfsmittel aufgezeigt, die das Sieben mit Ultraschall unterstützen. So gibt Fig. 31 eine Schwingsiebmaschine 70 mit Ultraschall-Siebvorrichtung wieder, bei der in einem Gefäß 82 ein Druckunterschied zwischen der oberen und unteren Siebfläche erzeugt wird.

In Fig. 32 wird bei einer Ultraschall-Siebvorrichtung das Siebgut 72 durch Düsen 84 mittels Luftstrahl 86 auf die Siebfläche 18 geschossen, was den Durchsatz beim Sieben positiv beeinflußt.

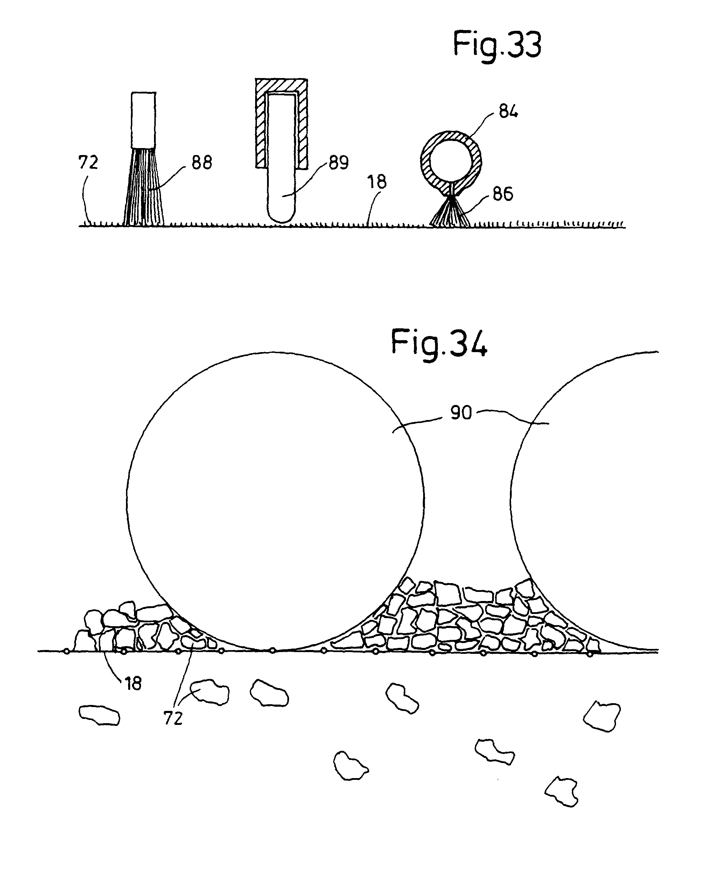

Fig. 33 zeigt eine Ultraschall-Siebvorrichtung, bei der für die Materialverteilung auf dem Sieb 18 Gas- oder Flüssigkeitsstrahlen 86, Bürsten 88 und/oder Profile 89 aus Kautschuk, Kunststoff und Metall verwendet werden.

Schließlich sind auf dem Sieb 18 der Fig. 34 Kugelkörper 90 aus Metall oder Kunststoff vorgesehen, die sich durch Ultraschall bewegen und das Siebgut 72 durch die Maschen drücken.

## Patentansprüche

1. Vorrichtung zum Sieben, Klassieren, Sichten, Filtern oder Sortieren trockener fester Stoffe oder fester Stoffe in Flüssigkeiten mit in einem Siebrahmen vorgesehener Siebfläche und dieser zugeordnetem Ultraschallwandler, durch welchen der Siebfläche Schwingungen zuleitbar sind,

**dadurch gekennzeichnet, dass** dem Ultraschallwandler (10) wenigstens ein an der Siebfläche (18) anliegender Resonator (14) zugeordnet ist, der auf die Resonanz des Ultraschallwandlers abgestimmt und von letzterem in Schwingungen, insbesondere in Biegeschwingungen , versetzbar ist, und dass der Resonator Stabresonatoren (16; 16k; 44; 48; 46) oder wenigstens einen Kreisstab (68) aufweist.

2. Vorrichtung nach Anspruch 1 **dadurch gekennzeichnet, daß** der Resonator (14) im Zentrum der Siebfläche (18) vorgesehen ist und die Resonanz übertragenden Elemente (16) von ihm radial abragen.

3. Vorrichtung nach einem der Ansprüche 1 oder 2, **dadurch gekennzeichnet, daß** die Stabresonatoren (16) in Abstand (b) zum Rahmen (20) enden.

4. Vorrichtung nach Anspruch 2 oder 3, **dadurch gekennzeichnet, daß** die freien Enden (16$_a$) der etwa radialen Stabresonatoren (16) durch dünne Entkopplungsbleche (50) mit dem Rahmen (20) verbunden sind, wobei die Entkopplungsbleche bevorzugt in einem Knotenpunkt des Bewegungsnullpunktes festgelegt sind.

5. Vorrichtung nach Anspruch 3, **dadurch gekennzeichnet, daß** gekrümmte Stabresonatoren (16$_k$) vom Zentrum (Z) ausgehen und in Abstand zum Rahmen (20) an diesem durch Radialbleche (50$_a$) angebracht sind, wobei die Radialbleche bevorzugt in einem Knotenpunkt des Bewegungsnullpunktes festgelegt sind.

6. Vorrichtung nach Anspruch 1, **dadurch gekennzeichnet, dass** der wenigstens eine Kieisstab (68) konzentrisch verläuft und mit dem Rahmen durch Radialbleche (50$_a$) verbunden ist, wobei die Radialbleche bevorzugt in einem Knotenpunkt des Bewegungsnullpunktes festgelegt sind.

7. Vorrichtung nach Anspruch 6, **dadurch gekennzeichnet, daß** der Ultraschallwandler (10) exzentrisch angebracht ist.

8. Vorrichtung nach einem der Ansprüche 1 bis 7, **dadurch gekennzeichnet, daß** auf den Stabresonatoren (16, 16$_k$) wenigstens ein Lochblech (58) aufliegt.

9. Vorrichtung nach einem der Ansprüche 1 bis 7, **dadurch gekennzeichnet, daß** die Stabresonatoren als Lochblech (58) ausgebildet sind.

10. Vorrichtung nach einem der Ansprüche 1 bis 9, **dadurch gekennzeichnet, daß** zwischen Ultraschallwandler (10) und Resonator (14) wenigstens ein Befestigungselement (12) verläuft und an diesem die Stabresonatoren (16) eingespannt sind, die in Longitudinalresonanz mit dem Ultraschallwandler schwingen, wobei weitere Biege- oder Longitudinalschwingungen erzeugbar und auf die Siebfläche (18) übertragbar sind.

11. Vorrichtung nach einem der Ansprüche 1 bis 10, **dadurch gekennzeichnet, daß** der Resonator (14, 16) an einer ein Amplitudenminimum aufweisenden Stelle form- oder kraftschlüssig, direkt oder indirekt, mit den Siebrahmen (20) verbunden ist.

12. Vorrichtung nach einem der Ansprüche 1 bis 11, **dadurch gekennzeichnet, daß** die Siebfläche (18) durch den Ultraschallwandler (10) mit dem Resonator (14) an zumindest einer Stelle abgestützt ist.

13. Vorrichtung nach einem der Ansprüche 1 bis 12, **dadurch gekennzeichnet, daß** sie durch zumindest ein übergeordnetes Schwingsystem in allen Ebenen bewegbar ausgebildet ist.

14. Vorrichtung nach einem der Ansprüche 1 bis 13, **dadurch gekennzeichnet, daß** ein Sockelgehäuse (28) des Ultraschallwandlers (10) ihm zugeordnete Piezokeramikteile (30) und Kontaktelemente (32) luftdicht abschließt.

15. Vorrichtung nach einem der Ansprüche 1 bis 14, **gekennzeichnet durch** zwei aufeinanderliegende Siebflächen (18, 19) unterschiedlicher Maschenweite, wobei die gröbere der beiden Siebflächen (18) für die Fortpflanzung und die Übertragung der Schwingungen eingesetzt ist.

16. Vorrichtung nach Anspruch 15, **dadurch gekennzeichnet, daß** die Siebflächen (18, 19) miteinander verbunde sind.

17. Vorrichtung nach wenigstens einem der Ansprüche 1 bis 16, **gekennzeichnet durch** ein Sieb aus verschiedenen Drahtdurchmessern.

18. Vorrichtung nach wenigstens einem der Ansprüche 1 bis 17, **gekennzeichnet durch** einen Druckunterschied zwischen der oberen und unteren Siebfläche (19,18).

19. Vorrichung nach wenigstens einem der Ansprüche 1 bis 18, **gekennzeichnet durch** einen Gas- oder Flüssigkeitsstrahl (86) auf der Siebfläche (18, 19) zur Materialverteilung bzw. Förderung von Siebgut (72).

**20.** Vorrichtung nach wenigstens einem der Ansprüche 1 bis 19, **gekennzeichnet durch** auf der Siebfläche (18, 19) verteilte Bürsten (88) und/oder Profile (89) aus Kautschuk, Kunststoff oder Metall zur Materialverteilung.

**21.** Vorrichtung nach wenigstens einem der Ansprüche 1 bis 20, **gekennzeichnet durch** Körper (90) auf der Siebfläche (18, 19), die zu dieser frei bewegbar sind.

**22.** Vorrichtung nach wenigstens einem der Ansprüche 1 bis 21, **gekennzeichnet durch** Schalleitungen aus Metall zur frequenzabgestimmten Verteilung des Ultraschalls vom Ultraschallwandler (10).

**23.** Verfahren zum Sieben, Klassieren, Sichten, Filtern oder Sortieren trockener fester Stoffe oder fester Stoffe in Flüssigkeiten mit in einem Siebrahmen vorgesehener Siebfläche und diesem zugeordnetem Ultraschallwandler, durch welchen der Siebfläche Schwingungen zugeleitet werden, insbesondere mit einer Siebvorrichtung nach wenigstens einem der vorangehenden Patentansprüche, **dadurch gekennzeichnet, dass** von einem ausserhalb einer Siebfläche festliegenden Ultraschallwandler Ultraschall über wenigstens einen mit der Siebfläche verbundenen Resonator der Siebfläche zugeführt und radial zum Resonator an dieser entlanggeleitet wird, welcher Resonator wenigstens einen Kreisstab (68) oder Stabresonatoren (16; 16k; 44; 48; 46) aufweist.

**24.** Verfahren nach Anspruch 23, **gekennzeichnet durch** eine Arbeitsfrequenz im Bereich von 15 - 100 kHz.

**25.** Verfahren nach Anspruch 24, **gekennzeichnet durch** Frequenzmodulierung.

**26.** Verfahren nach Anspruch 23, **gekennzeichnet durch** Ampirtudenmodulierung.

**27.** Verfahren nach Anspruch 25 und 26, **gekennzeichnet durch** eine Frequenz- und Amplitudenmodulierung.

**Claims**

**1.** Device for screening, grading, sifting, filtering or sorting dry solid substances or solid substances in liquids, comprising a screening surface provided in a screen frame and an ultrasonic transducer associated therewith by means of which vibrations can be transmitted to the screening surface, **characterised in that** at least one resonator (14) adjacent to the screening surface (18) is associated with the ultrasonic transducer (10), is tuned to the resonance of the ultrasonic transducer and can be vibrated by the latter, in particular with bending vibrations, and that the resonator has rod-type resonators (16; 16k; 44; 48;46) or at least one circular rod (68)..

**2.** Device according to claim 1, **characterised in that** the resonator (14) is provided in the centre of the screening surface (18) and the resonance transmitting elements project radially from the resonator.

**3.** Device according to one of claims 1 or 2, **characterised in that** the rod-type resonators (16) end at a distance (b) from the frame (20).

**4.** Device according to claim 2 or 3, **characterised in that** the free ends (16a) of the substantially radial rod-type resonators (16) are connected to the frame (20) by means of thin decoupling sheets (50), the decoupling sheets preferably being fixed in a nodal point of vibration.

**5.** Device according to claim 3, **characterised in that** curved rod-type resonators (16k) depart from the centre (Z) and are mounted on the frame (20) at a distance therefrom by means of radial sheets (50a), the radial sheets preferably being fixed in a nodal point of vibration.

**6.** Device according to claims 1, **characterised in that** the at least one circular rod (68) runs concentrically and is connected to the frame by means of radial sheets (50a), the radial sheets preferably being fixed in a nodal point of vibration.

**7.** Device according to claim 6, **characterised in that** the ultrasonic transducer (10) is eccentrically mounted.

**8.** Device according to one of claims 1 to 7, **characterised in that** at least one perforated sheet (58) rests on the rod-type resonators (16,16k).

**9.** Device according to one of claims 1 to 7, **characterised in that** the rod-like resonators are constructed as the perforated sheet (58).

**10.** Device according to one of claims 1 to 9, **characterised in that** at least one securing element (12) extends between the ultrasonic transducer (10) and the resonator (14) and the rod-type resonators (16) which vibrate in longitudinal resonance with the ultrasonic transducer are clamped to the said securing element, wherein further bending or longitudinal vibrations can be generated and transferred to the screening surface (18).

**11.** Device according to one of claims 1 to 10, **charac-**

**terised in that** the resonator (14,16) is connected positively or non-positively, directly or indirectly to the screen frame (20) at a point with minimum amplitude.

12. Device according to one of claims 1 to 11, **characterised in that** the screening surface (18) is supported at least at one point by the ultrasonic transducer (10) with the resonator (14).

13. Device according to one of claims 1 to 12, **characterised in that** it is designed so that it can be moved in all planes by means of at least one higher-level vibration system.

14. Device according to one of claims 1 to 13, **characterised in that** a base housing (28) of the ultrasonic transducer (10) encloses piezo ceramic parts (30) and contact elements (32) associated therewith in an airtight manner.

15. Device according to one of claims 1 to 14, **characterised by** two screening surfaces (18,19) of different mesh widths situated one on top of the other, the coarser of the two screening surfaces (18) being used for the propagation and transmission of the vibrations.

16. Device according to claim 15, **characterised in that** the screening surfaces (18,19) are connected together.

17. Device according to at least one of claims 1 to 16, **characterised by** a screen of different wire diameters.

18. Device according to one of claims 1 to 17, **characterised by** a pressure difference between the upper and lower screening surfaces (19,18).

19. Device according to at least one of claims 1 to 18, **characterised by** a jet (86) of gas or liquid on the screening surface (18,19) for the material distribution or conveying of screened material (72).

20. Device according to one of claims 1 to 19, **characterised by** brushes (88) and/or profiles (89) made of rubber, plastic or metal distributed on the screening surface (18,19) for material distribution.

21. Device according to at least one of claims 1 to 20 **characterised by** bodies (90) on the screening surface (18,19) which are freely movable relative thereto.

22. Device according to at least one of claims 1 to 21, **characterised by** metal sound conductors for the frequency-tuned distribution of ultrasound from the ultrasonic transducer (10).

23. Process for screening, grading, sifting, filtering or sorting dry solid substances or solid substances in liquids comprising a screening surface provided in a screen frame and an ultrasonic transducer associated therewith by means of which vibrations can be transmitted to the screening surface, in particular comprising a screening device according to at least one of the preceding claims, **characterised in that** ultrasound from an ultrasonic transducer fixed outside a screening surface is transmitted to the screening surface by means of at least one resonator connected to the screening surface and is guided along this screening surface radially to the resonator, which resonator has at least one circular rod (68) or rod-type resonators (16; 16k; 44; 48; 46).

24. Process according to claim 23, **characterised by** an operating frequency in the range of 15 to 100 kHz.

25. Process according to claim 24, **characterised by** frequency modulation.

26. Process according to claim 23, **characterised by** amplitude modulation.

27. Process according to claims 25 and 26, **characterised by** frequency and amplitude modulation.

**Revendications**

1. Un dispositif de criblage, de triage, de tamisage, de filtrage ou d'épuration de substances solides sèches ou de substances solides dans des liquides, comprenant une surface de criblage prévue dans un cadre de criblage et un transducteur ultrasonique associé à cette surface et susceptible de transmettre des vibrations à la surface de criblage, **caractérisé en ce qu'**au moins un résonateur (14) monté sur la surface de criblage (18) est associé au transducteur ultrasonique (10), le résonateur étant accordé sur la résonance du transducteur ultrasonique et étant susceptible d'être mis en vibration par ce dernier, en particulier en vibrations de flexion, et **en ce que** le résonateur comporte des résonateurs à barrette (16 ; 16k ; 44 ; 48 ; 46).ou au moins une barre circulaire (68).

2. Dispositif selon la revendication 1, **caractérisé en ce que** le résonateur (14) est disposé au centre de la surface de criblage (18) et **en ce que** les éléments transmettant la résonance font saillie à partir du résonateur radialement.

3. Dispositif selon l'une des revendications 1 ou 2, **ca-**

**ractérisé en ce que** les résonateurs à barre (16) se terminent à une distance (b) du cadre (20).

4. Dispositif selon la revendication 2 ou 3, **caractérisé en ce que** les extrémités libres (16$_a$) des résonateurs à barre qui sont sensiblement radiaux (16), sont reliées au cadre (20) au moyen de tôles minces de découplage (50), les tôles de découplage étant de préférence situées en un point nodal du point à déplacement nul.

5. Dispositif selon la revendication 3, **caractérisé en ce que** des résonateurs à barre incurvés (16$_k$) partent du centre (Z) et sont appliqués à distance du cadre (20) à ce dernier par des tôles radiales (50$_a$), qui sont de préférences situées en un point nodal du point à déplacement nul.

6. Dispositif selon la revendication 1, **caractérisé en ce que** la au moins une barre circulaire (68), passe concentriquement dans le cadre (20) en étant reliée au cadre par des tôles radiales (50$_a$), qui sont de préférence situées en un point nodal du point à déplacement zéro.

7. Dispositif selon la revendication 6, **caractérisé en ce que** le transducteur ultrasonique (10) est monté de façon excentrée.

8. Dispositif selon l'une des revendications 1 à 7, **caractérisé en ce qu'**au moins une tôle perforée (58) est en appui sur les résonateurs à barre (16,16$_k$).

9. Dispositif selon l'une des revendications 1 à 7, **caractérisé en ce que** les résonateurs à barre sont en tôle perforée.

10. Dispositif selon l'une des revendications 1 à 9, **caractérisé en ce que**, entre le transducteur ultrasonique (10) et le résonateur (14), est au moins un élément de fixation (12) auquel sont fixés rigidement les résonateurs à barre (16) qui vibrent en résonance longitudinale avec le transducteur ultrasonique, des vibrations supplémentaires longitudinales ou de flexion étant susceptibles d'être générées et transférées à la surface de criblage (18).

11. Dispositif selon l'une des revendications 1 à 10, **caractérisé en ce que** le résonateur (14, 16) est relié, à un des emplacements présentant une amplitude minimale, directement ou indirectement au cadre de criblage (20), par une liaison de forme ou forcée.

12. Dispositif selon l'une des revendications 1 à 11, **caractérisé en ce que** la surface de criblage (18) est supportée, à au moins un emplacement, par le transducteur ultrasonique (10) avec le résonateur (14).

13. Dispositif selon l'une des revendications 1 à 12, **caractérisé en ce qu'**il est constitué par au moins un système vibratoire de rang supérieur et est susceptible de se déplacer dans tous les plans.

14. Dispositif selon l'une des revendications 1 à 13, **caractérisé en ce qu'**un boîtier de socle (28) du transducteur ultrasonique (10) renferme de façon étanche à l'air des pièces en piézo-céramique (30) et des éléments de contact (32) qui sont associés au transducteur.

15. Dispositif selon l'une des revendications 1 à 14, **caractérisé par** deux surfaces de criblage situées l'une au-dessus de l'autre (18, 19) présentant différentes largeurs de maille, celle des deux surfaces de criblage (18) qui est la plus grossière étant prévue pour la propagation et la transmission des vibrations.

16. Dispositif selon la revendication 15, **caractérisé en ce que** les surfaces de criblage (18, 19) sont reliées l'une à l'autre.

17. Dispositif selon l'une des revendications 1 à 16, **caractérisé par** un tamis composé de différents diamètres de fils.

18. Dispositif selon au moins l'une des revendications 1 à 17, **caractérisé par** une différence de pression entre les surfaces de criblage supérieure et inférieure (19, 18).

19. Dispositif selon au moins l'une des revendications 1 à 18, **caractérisé par** un jet de gaz ou de liquide (86) sur la surface de criblage (18, 19) pour la répartition de matière, ou le transport, du matériau à tamiser (72).

20. Dispositif selon au moins l'une des revendications 1 à 19, **caractérisé par** des brosses (88) et/ou des profils (89) en caoutchouc, en matière plastique ou en métal, distribués sur la surface de criblage (18, 19), pour la répartition du matériau.

21. Dispositif selon au moins l'une des revendications 1 à 20, **caractérisé par** des corps (90) sur la surface de criblage (18, 19) qui sont librement déplaçables par rapport à cette surface.

22. Dispositif selon au moins l'une des revendications 1 à 21, **caractérisé par** des conduites acoustiques en métal pour la distribution accordée en fréquence des ultrasons à partir du transducteur ultrasonique (10).

23. Procédé de criblage, de triage, de tamisage, de filtrage ou d'épuration de substances solides sèches ou de substances solides dans des liquides avec une surface de criblage disposée dans un cadre de criblage, et un transducteur ultrasonique associé à cette surface, au moyen duquel des vibrations sont transmises à la surface de criblage, en particulier avec un dispositif de criblage selon au moins l'une des revendications précédentes, **caractérisé en ce qu'**un ultrason ou une vibration ultrasonique provenant d'un transducteur ultrasonique situé, de façon fixe, à l'extérieur d'une surface de criblage, est appliqué à la surface de criblage via au moins un résonateur relié à la surface de criblage, et est guidé (e) le long de cette surface, radialement par rapport au résonateur, lequel résonateur comporte au moins une barre circulaire (68) ou des résonateurs à barre (16 ; 16k ; 44 ; 48 ; 46)

24. Procédé selon la revendication 23, **caractérisé par** une fréquence de fonctionnement dans la gamme de 15 à 100 kHz.

25. Procédé selon la revendication 24, **caractérisé par** une modulation de fréquence.

26. Procédé selon la revendication 23, **caractérisé par** une modulation d'amplitude.

27. Procédé selon la revendication 25 et 26, **caractérisé par** une modulation de fréquence et d'amplitude.

Fig.2

Fig.1

Fig.3

Fig.5

Fig.4

Fig.6

Fig.7

Fig.8

Fig.9

Fig.10

Fig.11

Fig.12

Fig.13

Fig.14

Fig.15

Fig.16

Fig.17

Fig.18

Fig.19

62a     65     58

**Fig.20**

**Fig.21**

b     16k     20     49

66     Z     50a

10b

50a

20

50a     68

67

**Fig.22**

## Fig.23

## Fig.24

Fig.25

Fig.26

Fig.27

Fig.28

## Fig.30

16   14

80

10

## Fig.29

18   20

16

14

80

Fig.31

Fig.32

## Fig.33

## Fig.34